# EUROPÄISCHE PATENTANMELDUNG

(11) **EP 2 538 153 A2**
(43) Veröffentlichungstag der Anmeldung: **26.12.2012**
(21) Anmeldenummer: 12003844.3
(22) Anmeldetag: 14.05.2012
(51) Int. Cl.: F24J 3/08

(54) **Erdkollektorsystem, Verfahren zur Steuerung und Verfahren zur Errichtung**

(30) Priorität: 21.06.2011 DE 102011111704
(71) Anmelder: WQ-Tec AG, 4142 Münchenstein (CH)
(72) Erfinder: Steinhäuser, Harry, 96191 Viereth-Trunstadt (DE)
(74) Vertreter: Koch Müller Patentanwaltsgesellschaft mbH

(57) **Zusammenfassung**

Erdkollektorsystem für eine Wärmepumpe (400),
- mit einem ersten Kreislauf (1), wobei der erste Kreislauf (1) eine erste Erdkollektorvorrichtung (100, 100', 100") aufweist,
- mit einem zweiten Kreislauf (2), wobei der zweite Kreislauf (2) eine
zweite Erdkollektorvorrichtung (200, 200', 200") aufweist,

dadurch gekennzeichnet,
- dass mit dem ersten Kreislauf (1) und mit dem zweiten Kreislauf (2) ein Stellglied (500) verbunden ist,
- dass die erste Erdkollektorvorrichtung (100, 100', 100") unterhalb einer versiegelten Erdoberfläche (310) angeordnet ist,
- dass die zweite Erdkollektorvorrichtung (200, 200', 200") unterhalb einer nicht-versiegelten Erdoberfläche (320) angeordnet ist, und
- dass das Stellglied (500) zum einstellbaren Einlass eines Mediums zum Wärmetransport in den ersten Kreislauf (1) und/oder den zweiten Kreislauf (2) und/oder zum einstellbaren Auslass des Mediums aus dem ersten Kreislauf (1) und/oder dem zweiten Kreislauf (2) ausgebildet ist.

## Beschreibung

Die vorliegende Erfindung betrifft ein Erdkollektorsystem, ein Verfahren zur Steuerung eines Erdkollektorsystems und ein Verfahren zur Errichtung eines Erdkollektorsystems.

Aus der DE 10 2006 061 065 A1 ist ein Erdkollektormodul für eine Wärmepumpe und Verfahren zur Errichtung eines Erdkollektors bekannt. Das Erdkollektormodul weist einen Träger auf, der als formstabile Gitterstruktur ausgebildet ist und eine ebene Form aufweist. Das Erdkollektormodul weist weiterhin ein flexibles Kunststoffrohr auf, das für ein durchlaufendes Rohrsystem als durchgehende Schlaufe über die Ebene des Trägers verlegt und auf dem Träger befestigt ist.

Aus der DE 31 12 498 C2 ist eine Heizungsanlage für ein Gebäude zur Raumbeheizung und/oder Warmwasserbereitung mit einer Wärmepumpe bekannt. Aus DE 31 01 537 A1 ist ein unterirdischer Wärmespeicher und ein Verfahren zu seiner Herstellung bekannt. Aus der US 2,584,573 ist ein Verfahren und eine Vorrichtung zur Beheizung eines Hauses bekannt.

Der Erfindung liegt die Aufgabe zu Grunde Erdkollektorsystem für eine Wärmepumpe, insbesondere für kleine Grundstücke, möglichst zu verbessern.

Diese Aufgabe wird durch Erdkollektorsystem mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Erdkollektorsystem für eine Wärmepumpe vorgesehen.

Das Erdkollektorsystem weist einen ersten Kreislauf auf. Der erste Kreislauf ist vorteilhafterweise über ein Stellglied und die Wärmpumpe geschlossen. Der erste Kreislauf weist zumindest eine erste Erdkollektorvorrichtung auf. Um einen geschlossenen ersten Kreislauf zu bilden, ist vorzugsweise ein durchgehendes Rohrsystem mit der ersten Erdkollektorvorrichtung und mit einem Vorlauf und einem Rücklauf vorgesehen. Die Erdkollektorvorrichtung weist die Funktion auf einen guten Wärmeübergang zwischen einem in der Erdkollektorvorrichtung fließendem Medium zum Wärmetransport und dem umgebenden Erdreich zu bewirken, um dem Erdreich Wärme zu entziehen oder Wärme an das Erdreich abzugeben. In Abhängigkeit von der benötigen Leistung ist vorzugsweise eine Mehrzahl von ersten Erdkollektorvorrichtungen vorgesehen. Das Medium zum Wärmetransport kann auch als Wärmeträgermedium bezeichnet werden. Das Medium ist vorzugsweise ein Fluid, wie beispielsweise Kältemittel. Ein zu verwendendes Medium ist beispielsweise das Frostschutzmittel Monoethylenglykol.

Die Erdkollektorvorrichtung ist vorzugsweise als flächige Einheit (Modul) ausgebildet. Die vorteilhafterweise vorgefertigte Einheit kann auch als Modul bezeichnet werden. Die Einheit ist dabei separat handhabbar und sowohl als Funktionselement als auch als Organisationseinheit zu verstehen. Vorzugsweise weist die Einheit ein Rohr und einen Träger auf, wobei eine Verlegungsform des Rohres mit dem Träger fixiert ist. Die flächige Ausbildung jeder Erdkollektorvorrichtung ermöglicht es, eine größere Gesamtfläche eines Erdkollektors durch eine Mehrzahl von Erdkollektorvorrlchtungen auf einer Baustelle schnell zu errichten.

Das Erdkollektorsystem weist einen zweiten Kreislauf auf. Der zweite Kreislauf ist vorteilhafterweise über das Stellglied und die Wärmpumpe geschlossen. Der zweite Kreislauf weist zumindest eine zweite Erdkollektorvorrichtung auf. In Abhängigkeit von der benötigen Leistung ist vorzugsweise eine Mehrzahl von zweiten Erdkollektorvorrichtungen vorgesehen. Vorzugsweise sind die erste Erdkollektorvorrichtung und die zweite Erdkollektorvorrichtung baugleich ausgebildet.

Das Erdkollektorsystem weist ein Stellglied auf. Das Stellglied ist mit dem ersten Kreislauf und mit dem zweiten Kreislauf verbunden. Das Stellglied weist vorzugsweise einen ersten Anschluss zur Verbindung mit dem ersten Kreislauf und einen zweiten Anschluss zur Verbindung mit dem zweiten Kreislauf auf. Das Stellglied ist beispielsweise als Ventil ausgebildet.

Die erste Erdkollektorvorrichtung ist unterhalb einer versiegelten Erdoberfläche angeordnet. Eine versiegelte Oberfläche lässt kein Oberflächenwasser, wie Regenwasser, in das Erdreich versickern. Demzufolge gelangt keine Energie des Oberflächenwassers an die erste Erdkollektorvorrichtung. Eine Versiegelung der Erdoberfläche ist beispielsweise ein Gebäude, eine Zufahrt, ein Parkplatz oder eine überdachtes Gelände.

Die zweite Erdkollektorvorrichtung Ist unterhalb einer nicht-versiegelten Erdoberfläche angeordnet. Oberflächenwasser kann durch eine nicht-versiegelte Oberfläche - einen Mindest-Duchlässigkeitsbeiwert des Erdreichs vorausgesetzt - bis zu der zweiten Erdkollektorvorrichtung versickern und somit eine mit dem Oberflächenwasser mitgeführte Wärmemenge in die Nähe oder an die zweite Erdkollektorvorrichtung bringen. Eine nicht-versiegelte Oberfläche ist beispielsweise eine Wiese oder ein poröser Boden mit ggf. einer Bepflanzung, wie Sträucher oder Bäume.

Das Stellglied ist zum einstellbaren Einlass des Mediums in den ersten Kreislauf (Vorlauf) und/oder den zweiten Kreislauf ausgebildet. Alternativ oder in Kombination ist das Stellglied zum einstellbaren Auslass des Mediums aus dem ersten Kreislauf (Rücklauf) und/oder dem zweiten Kreislauf ausgebildet.

In einer einfachen Ausführungsform ist für die Einstellung durch das Stellglied das Stellglied zum Öffnen und Sperren des ersten Kreislaufs und zum Öffnen und Sperren des zweiten Kreislaufs ausgebildet. Alternativ ist das Stellglied als Proportionalventil ausgebildet. Ebenfalls ist es möglich, das Stellglied durch eine erste Pumpe und eine unabhängig von der ersten Pumpe betreibbare zweite Pumpe zu bilden, wobei die erste Pumpe an den ersten Kreislauf und die zweite Pumpe an den zweiten Kreislauf angeschlossen ist.

Durch das erläuterte Erdkollektorsystem wird eine Vielzahl von Vorteilen erzielt. Beispielsweise ist durch das zuvor erläuterte Erdkollektorsystem die Verwendung einer Wärmepumpe ohne Tiefenbohrung auch dann möglich, wenn lediglich ein Grundstück mit nur kleinem Garten - also mit einer nur kleinen nicht-versiegelten Oberfläche zur Verfügung steht. Aufgrund der zwei Kreisläufe wird dennoch eine hohe Heizleistung erzielt. Dabei kann das Erdreich um die erste Erdkollektorvorrichtung durch Wärmeentnahme mittels der zweiten Erdkollektorvorrichtung thermisch regeneriert werden. Ist dies nicht erforderlich, kann die erste Erdkollektorvorrichtung auch besonders viel Wärme entzogen werden, so dass das versiegelte Erdreich im Bereich der ersten Erdkollektorvorrichtung als Kältereservoir für einen Kühlbetrieb im Sommer dienen kann.

Um unterschiedliche Betriebsmodi zu ermöglichen, ist in einer vorteilhaften Weiterbildung das Stellglied ausgebildet, den ersten Kreislauf und den zweiten Kreislauf parallel zu schalten. In einer anderen vorteilhaften Weiterbildung ist das Stellglied ausgebildet, den ersten Kreislauf und den zweiten Kreislauf in Reihe zu schalten. In einer anderen vorteilhaften Weiterbildung ist das Stellglied ausgebildet, den ersten Kreislauf und den zweiten Kreislauf einzeln zu schalten. In einer wiederum anderen vorteilhaften Weiterbildung ist das Stellglied ausgebildet, ein Verhältnis eines ersten Durchflusses durch den ersten Kreislauf und eines zweiten Durchflusses durch den zweiten Kreislauf zu steuern. Die zuvor genannten Weiterbildungen können vorteilhafterweise miteinander kombiniert werden.

Gemäß unterschiedlicher, auch miteinander kombinierbarer Weiterbildungen ist das Stellglied zur Handbetätigung und/oder Mediumbetätigung, beispielsweise hydraulisch oder pneumatisch, und/oder elektromotorischen Betätigung und/oder elektromagnetischen Betätigung ausgebildet.

Gemäß einer vorteilhaften Ausgestaltung weist der erste Kreislauf einen ersten Verteiler auf, an den Zuleitungen mehrerer erster Erdkollektorvorrichtungen angeschlossen sind. Gemäß einer anderen vorteilhaften Ausgestaltung der zweite Kreislauf einen zweiten Verteiler auf, an den Zuleitungen mehrerer zweiter Erdkollektorvorrichtungen angeschlossen sind.

In einer vorteilhaften Weiterbildung ist vorgesehen, dass mit dem Stellglied und/oder mit dem ersten Kreislauf und zweiten Kreislauf eine Pumpe zum Transport des Mediums verbunden ist. Vorzugsweise ist die Pumpe unabhängig von der Wärmepumpe steuerbar.

Gemäß einer anderen vorteilhaften Weiterbildung ist vorgesehen, dass mit dem Stellglied eine elektronische Steuerungsvorrichtung verbunden ist, die vorzugsweise zur Steuerung eines Heizbetriebs und eines Kühlbetriebs eingerichtet ist.

In einer bevorzugten Ausgestaltung ist die Steuerungsvorrichtung mit einem ersten Temperatursensor zur Messung einer ersten Temperatur im ersten Kreislauf und mit einem zweiten Temperatursensor zur Messung einer zweiten Temperatur im zweiten Kreislauf verbunden. Vorteilhafterweise ist die Steuerungsvorrichtung eingerichtet, das Stellglied basierend auf der ersten Temperatur und zweiten Temperatur zu steuern.

Gemäß einer besonders bevorzugten Weiterbildung ist die Steuerungsvorrichtung für unterschiedliche Betriebsmodi eingerichtet. Vorzugsweise ist die Steuerungsvorrichtung eingerichtet, in einem ersten Betriebsmodus das Stellglied zum gleichzeitigen parallelen Durchfluss des Mediums durch den ersten Kreislauf und durch den zweiten Kreislauf zu steuern. Vorzugsweise ist die Steuerungsvorrichtung eingerichtet, in einem zweiten Betriebsmodus für einen Kühlbetrieb das Stellglied zum Durchfluss des Mediums vorrangig durch den ersten Kreislauf zu steuern. Vorteilhafterweise wird das Medium nur durch den ersten Kreislauf gepumpt.

Vorzugsweise ist die Steuerungsvorrichtung eingerichtet, in einem dritten Betriebsmodus für einen Heizbetrieb das Stellglied zum Durchfluss des Mediums durch den ersten Kreislauf und/oder den zweiten Kreislauf in Abhängigkeit von einer ersten Temperatur des Mediums im ersten Kreislauf und einer zweiten Temperatur des Mediums im zweiten Kreislauf zu steuern.

Vorzugsweise ist die Steuerungsvorrichtung eingerichtet, in einem vierten Betriebsmodus dass Stellglied derart zu steuern, dass ein Durchfluss des Mediums durch den ersten Kreislauf und den zweiten Kreislauf durch Reihenschaltung des ersten Kreislaufs und des zweiten Kreislaufs mittels des Stellgliedes erfolgt.

In einer anderen Weiterbildung ist Erdkollektorsystem für ein Gebäude vorgesehen.

Die erste Erdkollektorvorrichtung ist als flächige Einheit (Modul) ausgebildet. Die erste Erdkollektorvorrichtung ist in einem Schlitz im Erdreich angeordnet, wobei der Schlitz in die Sohle einer Grube ins Erdreich gefräst ist. Vorzugsweise weist der Schlitz eine Breite kleine 20 cm, bevorzugt 15 cm, auf. Die Sohle der Grube dient dabei einer Errichtung des Gebäudes.

Die Erdkollektorvorrichtung ist im Schlitz unterhalb eines im Erdreich ausgebildeten Geschosses des Gebäudes von dem Geschoss des Gebäudes distanziert angeordnet. Vorzugsweise beträgt die Distanz mehr als einen Meter, beispielsweise 1,20 m. Der Schlitz ist mit einem Füllmaterial verfüllt. Das Füllmaterial weist dabei eine ausreichende Festigkeit auf, so dass der Schlitz keine negativen Einflüsse auf die Statik des Gebäudes ausübt. Vorteilhafterweise weist das Füllmaterial ein sich verfestigendes Material, insbesondere Beton auf. Alternativ weist das Füllmaterial ein hydraulisches Bindemittel mit Gesteinsmehlen oder feiner Gesteinskörnung auf, was beispielsweise als Füllbinder bezeichnet wird. In einer kostengünstigeren Ausgestaltung weist das Füllmaterial feinen Sand auf. Auch eine Kombination der genannten Materialen, beispielsweise in mehreren Schichten im Schlitz Ist vorteilhaft.

Gemäß einer bevorzugten Weiterbildung ist die Erdkollektorvorrichtung gegenüber einer Erdoberfläche vorwiegend vertikal angeordnet.

In einer anderen vorteilhaften Weiterbildung ist die Erdkollektorvorrichtung oberhalb eines Grundwasserbereichs angeordnet. Bevorzugt weist eine Bodenplatte des untersten Geschosses des Gebäudes eine der Erdkollektorvorrichtung zugewandte Wärmedämmung auf.

Ein weiterer Aspekt der Erfindung ist ein Verfahren zur Steuerung eines Erdkollektorsystems. Das Erdkollektorsystem weist einen ersten geschlossenen Kreislauf auf, der eine erste Erdkollektorvorrichtung unterhalb einer versiegelten Erdoberfläche und einen ersten Temperatursensor hat. Der Temperatursensor kann auch als Temperaturfühler bezeichnet werden.

Das Erdkollektorsystem weist einen zweiten geschlossenen Kreislauf auf, der eine zweite Erdkollektorvorrichtung unterhalb einer nicht-versiegelten Erdoberfläche und einen zweiten Temperatursensor aufweist.

Das Erdkollektorsystem weist weiterhin ein Stellglied auf, das mit dem ersten geschlossenen Kreislauf und mit dem zweiten geschlossenen Kreislauf verbunden ist.

Das Erdkollektorsystem weist weiterhin eine Steuerungsvorrichtung auf, die mit dem Stellglied, dem ersten Temperatursensor und dem zweiten Temperatursensor verbunden ist.

In dem Verfahren wird eine erste Temperatur eines Mediums zum Wärmetransport In einem ersten Rücklauf des ersten Kreislaufs durch den ersten Temperatursensor gemessen. In dem Verfahren wird eine zweite Temperatur des Mediums in einem zweiten Rücklauf des zweiten geschlossenen Kreislaufs durch den zweiten Temperatursensor gemessen.

Durch die Steuerungsvorrichtung wird das Stellglied basierend auf der ersten Temperatur und der zweiten Temperatur gesteuert. Vorzugsweise wird das Stellglied entsprechend der zuvor erläuterten Betriebmodi gesteuert.

Ein weiterer Aspekt ist ein Verfahren zur Errichtung eines Erdkollektorsystems. Das Erdkollektorsystem weist einen ersten Kreislauf auf. Der erste Kreislauf weist eine erste Erdkollektorvorrichtung auf. Das Erdkollektorsystem weist einen zweiten Kreislauf auf. Der zweite Kreislauf weist eine zweite Erdkollektorvorrichtung auf.

In dem Verfahren wird mit dem ersten Kreislauf und mit dem zweiten Kreislauf ein Stellglied verbunden. Das Stellglied ist zum einstellbaren Einlass eines Mediums zum Wärmetransport in den ersten Kreislauf und/oder den zweiten Kreislauf und/oder zum einstellbaren Auslass des Mediums aus dem ersten Kreislauf und/oder dem zweiten Kreislauf ausgebildet.

In dem Verfahren wird die erste Erdkollektorvorrichtung unterhalb einer versiegelten Erdoberfläche angeordnet. Die zweite Erdkollektorvorrichtung wird unterhalb einer nicht-versiegelten Erdoberfläche angeordnet.

In einer vorteilhaften Weiterbildung wird in dem Errichtungsverfahren in einer Grube zur Errichtung eines Gebäudes in die Sohle der Grube ein Schlitz eingebracht, Insbesondere gefräst. Der Schlitz wird vor Ausbildung einer Bodenplatte in das Erdreich derart eingebracht, dass mit Errichtung des Gebäudes der Schlitz unterhalb der Bodenplatte eines Geschosses des Gebäudes positioniert ist.

In den Schlitz wird die erste Erdkollektorvorrichtung eingebracht und der Schlitz mit einem Füllmaterial verfüllt. Die erste Erdkollektorvorrichtung weist dabei eine Höhe auf, die kleiner als eine Tiefe des Schlitzes ist, so dass zwischen der ersten Erdkollektorvorrichtung und dem Geschoss des Gebäudes ein Abstand verbleibt.

Vorzugsweise wird eine Feuchte des Erdreichs im Bereich des Schlitzes durch Zugabe von Wasser eingestellt.

Die zuvor beschriebenen Weiterbildungsvarlanten sind sowohl einzeln als auch in Kombination besonders vorteilhaft. Dabei können sämtliche Weiterbildungsvarlanten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarlanten sind jedoch nicht abschließend.

Im Folgenden wird die Erfindung durch Ausführungsbeispiele anhand zeichnerischer Darstellungen näher erläutert.

Dabei zeigen
- Fig. 1: eine Erdkollektorvorrichtung,
- Flg. 2: ein Erdkollektorsystem, und
- Fig. 3: ein Gebäude mit einem Erdkollektorsystem.

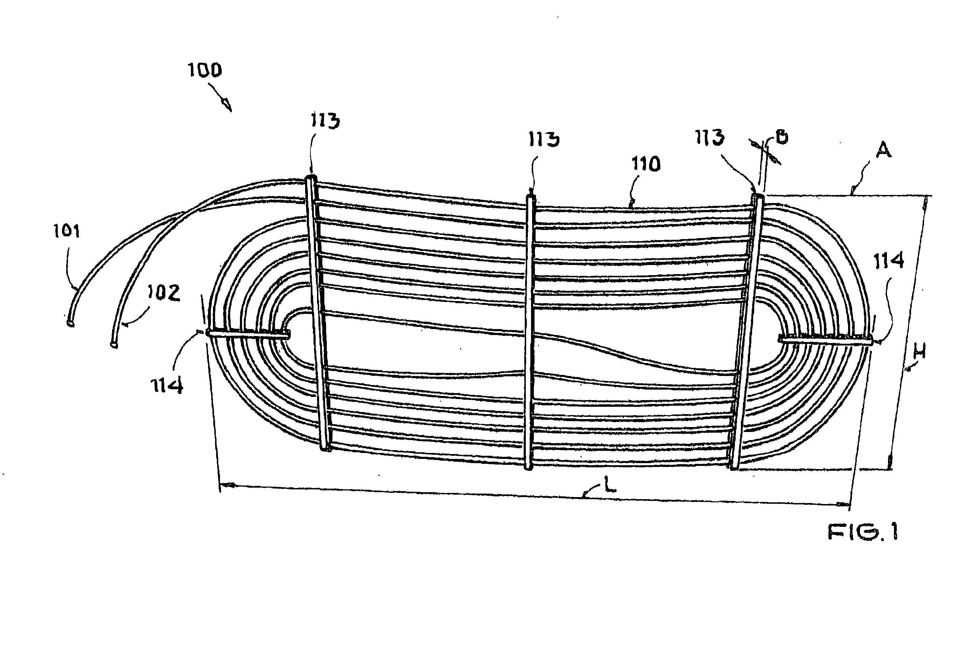

In Fig. 1 ist eine Erdkollektorvorrichtung 100 schematisch dargestellt. Die in Fig. 1 dargestellte Erdkollektorvorrichtung 100 kann mit einem Medium gefüllt werden, das zum Transport der Wärmeenergie zu einer Wärmepumpe dient. Hierzu weist die Erdkollektorvorrichtung 100 der Fig. 1 ein Rohr 110, beispielsweise ein Kunststoffrohr 110, auf. Das Rohr 110 weist zwei Anschlussbereiche 101 und 102 beispielsweise zum Anschluss an einen Verteilungsknoten auf. Die Erdkollektorvorrichtung 100 ist dabei flächig ausgebildet und weist eine im Verhältnis zur Höhe H und Länge L kleinere Breite B auf. Vorzugsweise erstreckt sich der Träger 113 über die Höhe H der Erdkollektorvorrichtung 100. Die Erdkollektorvorrichtung 100 erstreckt sich dabei über eine Fläche A, die durch die Höhe H und Länge L und somit durch die größten Maße (H, L) der Erdkollektorvorrichtung definiert ist.

Die Erdkollektorvorrichtung 100 Ist vorzugsweise formstabil ausgebildet. Beispielsweise ist die Erdkollektorvorrichtung 100 eine starre, biegesteife Konstruktion aus einem festen Leitungskörper für das Medium. Die Erdkollektorvorrichtung 100 der Fig. 1 liegt jedoch in Form eines Erdkollektormoduls vor, dessen Leitungsrohr 110 aus einem fortlaufenden flexiblen Kunststoffrohr 110 besteht, das auf einem mehrteiligen Träger 113, 114 aufgebracht ist. Das Rohr 110 ist als durchgehende Schlaufe verlegt. Unter einer durchgehenden Schlaufe wird dabei verstanden, dass innerhalb der Erdkollektorvorrichtung 100 das Rohr 110 keine Abzweigung, Verteiler oder dergleichen aufweist. Das als durchgehende Schlaufe auf dem Träger 113, 114 positionierte Rohr 110 kann daher auch als Rohrschlange bezeichnet werden. Das Rohr kann für den Energietransport zur Wärmepumpe mit einem beispielsweise flüssigen Wärmeträger als Medium gefüllt werden.

Ins Erdreich eingebracht, ermöglicht die Erdkollektorvorrichtung 100 eine gute Wärmekopplung auf beiden Hauptseiten der Erdkollektorvorrichtung 100 zum Erdreich. Die Erdkollektorvorrichtung ist für eine Wärmepumpe vorgesehen. Hierzu wird die Erdkollektorvorrichtung 100 mittels der Anschlussbereiche 101, 102 über Zuleitungen an die Wärmepumpe angeschlossen. Die Erdkollektorvorrichtung 100 weist eine derartige Formstabilität auf, dass insbesondere während der Errichtung des Erdkollektors Abschnitte des flexiblen Kunststoffrohres 110 zueinander auf Distanz gehalten werden können. Die Befestigung des auf dem Träger 113, 114 verlegten flexiblen Kunststoffrohres 110 bewirkt die Beibehaltung der geometrischen Form der Rohrverlegung, wie beispielsweise eine Spirale oder dergleichen.

Das Kunststoffrohr 110 ist vorzugsweise hochdruckvernetzt. Das Kunststoffrohr 110 ist vorzugsweise auf dem Träger 113, 114 kreuzungsfrei verlegt. Beispielsweise ist das Kunststoffrohr 110 auf dem Träger 113, 114 mäanderförmig oder spiralförmig verlegt.

Vorzugsweise wird mittels Klemmung des Kunststoffrohres 110 in Nuten des Trägers 113, 114 eine Formstabilität der gesamten Erdkollektorvorrichtung 100 bewirkt. Die Erdkollektorvorrichtung 100 weist als Träger mehrere voneinander beabstandete Trägerelemente 113, 114 auf. Die Trägerelemente 113, 114 sind dabel nicht untereinander verbunden. Die Trägerelemente 113, 114 sind dabei formstabil, beispielsweise aus Fichtenholz, ausgebildet. Die Erdkollektorvorrichtung 100 erhält ihre Festigkeit dabei aus der Befestigung des Kunststoffrohres 110 auf den Trägerelementen 113, 114.

Die Erdkollektorvorrichtung 100 ist vorzugsweise als Modul ausgebildet, wobei ein Modul eine vorgefertigte Baueinheit ist, die als Einheit an die Baustelle zur Errichtung angeliefert werden kann. Die Erdkollektorvorrichtung 100 kann für eine bezüglich der Erdoberfläche horizontale oder vertikale Errichtung ausgebildet sein. Die ebene Form der Erdkollektorvorrichtung 100 bewirkt eine im Vergleich zur Länge L und Tiefe/Höhe H wesentlich kleinere Breite B der Erdkollektorvorrichtung 100. Eine Planarität der Erdkollektorvorrichtung 100 ist hingegen nicht erforderlich. Die Modularität ermöglicht es, je nach Umgebungsbedingungen, wie Bodenbeschaffenheit, Abmessungen etc. die Abmessungen der Erdkollektorvorrichtung 100 anzupassen. Der Träger 113, 114 ist vorzugsweise formstabil, bevorzugt starr ausgebildet. Eine Länge der Holzplatten 113 bildet die Höhe H der Erdkollektorvorrichtung 100. Hingegen definieren die Rundungen des Kunststoffrohres 110 mit den optionalen Holzplatten 114 an den Stirnseiten der Erdkollektorvorrichtung 100 die Länge L der Erdkollektorvorrichtung 100. Die Breite B kann beispielsweise durch die Dicke der Holzplatten 113 definiert sein.

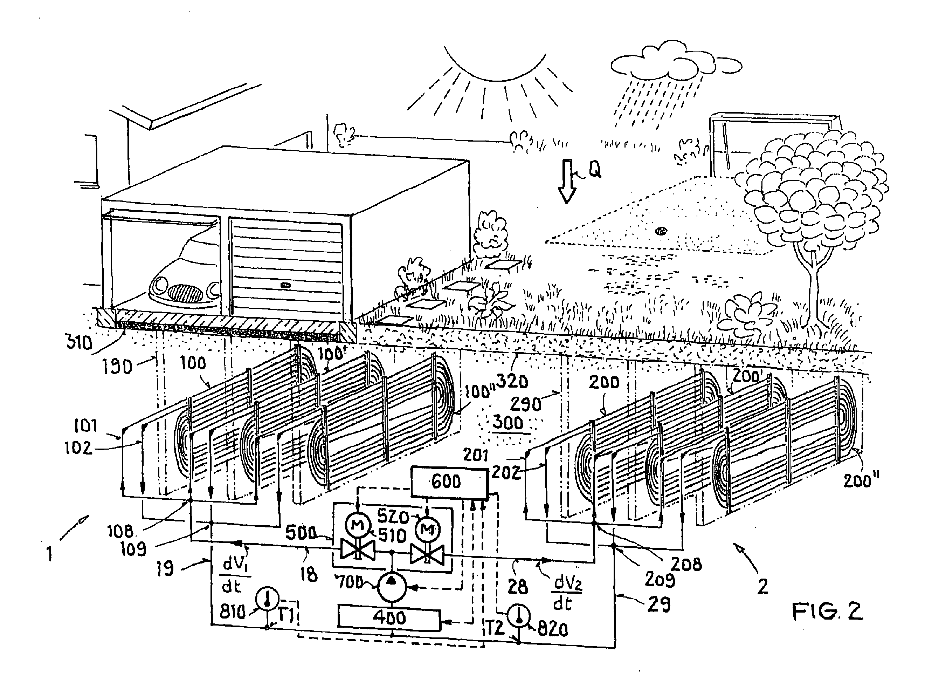

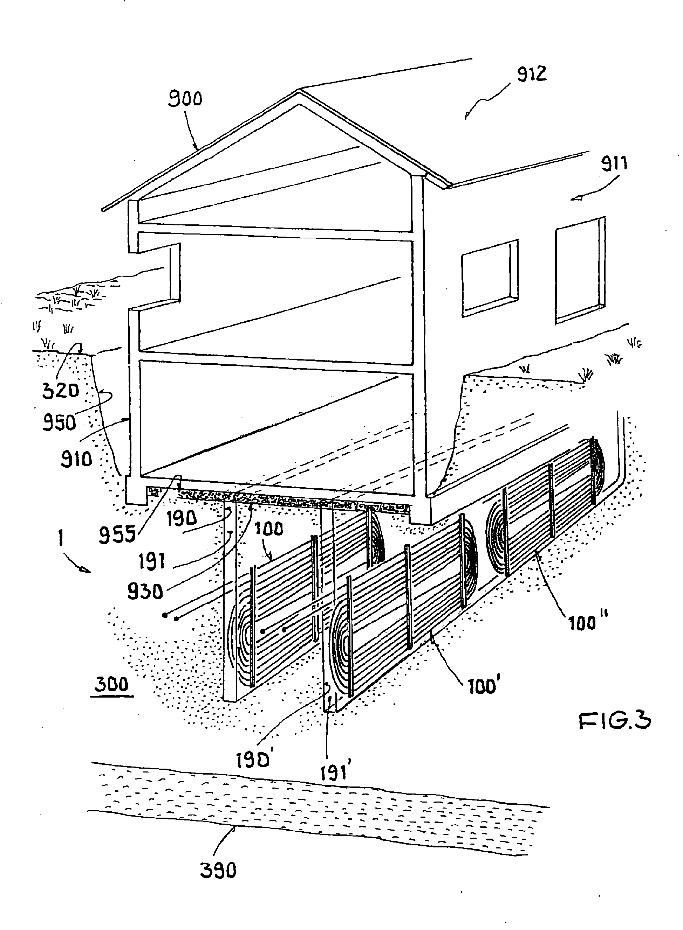

Die Erdkollektorvorrichtung 100 wird vorzugsweise für die folgenden Ausgestaltungen der Figuren 2 und 3 verwendet. Es können jedoch auch andere Erdkollektorvorrichtungen (nicht dargestellt) beispielsweise aus Kunststoffkörpern auch ohne Träger verwendet werden.

In Fig. 2 ist ein Ausführungsbeispiel eines Erdkollektorsystems schematisch dargestellt. Die Darstellung zeigt einen Teil eines Hauses mit einem relativ kleinen zugehörigen Grundstück. Das Erdkollektorsystem soll dazu dienen das Haus im Winter zu Heizen und im Sommer zu kühlen. Erdkollektorvorrichtungen 100, 100', 100", 200, 200' und 200" sind an unterschiedlichen Einbauorten ins Erdreich 300 eingebracht.

Zum Errichten des Erdkollektorsystems werden Schlitze 190, 290 ins Erdreich eingebracht - insbesondere gebaggert oder mittels Schlitzfräsverfahren ins Erdreich gefräst - und die Erdkollektorvorrichtungen 100, 200 In den Schlitzen 190, 290 positioniert. Die Erdkollektorvorrichtungen 100, 200 werden in den Schlitzen 190, 290 somit überwiegend vertikal im Erdreich 300 angeordnet. Bezeichnet horizontal die idealisierte Erdoberfläche ist die exakte Vertikale zur idealisierten Erdoberfläche in einem rechten Winkel.

Drei erste Erdkollektorvorrichtungen 100, 100' und 100" sind in einem ersten Kreislauf 1 über Zuleitungen 101, 102 durch Verteiler 108, 109 miteinander verbunden. Im Ausführungsbeispiel der Fig. 2 sind die drei ersten Erdkollektorvorrichtungen 100, 100', 100" parallel geschaltet, so dass das Medium zum Wärmtransport in dem Verteilern 108 auf die drei ersten Erdkollektorvorrichtungen 100, 100', 100" verteilt wird. Die drei ersten Erdkollektorvorrichtungen 100, 100', 100" sind vor dem Bau der Garage im Erdreich 300 errichtet worden, so dass aufgrund der Garage die drei ersten Erdkollektorvorrichtungen 100, 100', 100" unterhalb der versiegelten Oberfläche 310 ins Erdreich 300 eingebracht sind. Die Ausgestaltung der Fig. 2 weist gegenüber horizontal verlegten Erdkollektoren den Vorteil auf, dass die drei ersten Erdkollektorvorrichtungen 100, 100', 100" mit Abstand zur Bodenplatte der Garage eingebracht sind. Die Entfernung des obersten Rohres jedes der drei ersten Erdkollektorvorrichtungen 100, 100', 100" zur Unterkante der Bodenplatte ist im Ausführungsbeispiel der Fig. 2 1,20m. Hierdurch steht zur Wärmeentnahme ein großes Erdreichvolumen zur Verfügung. Zudem muss gegenüber einem horizontal verlegten Kollektor nicht die gesamte Fläche aufwendig ausgehoben und verdichtet werden. Aufgrund des genannten Abstands wird die Temperatur unter der Bodenplatte (310) der Garage nur unwesentlich beeinflusst, ob nun im Winter geheizt oder im Sommer gekühlt wird.

Im Ausführungsbeispiel der Fig. 2 sind drei zweite Erdkollektorvorrichtungen 200, 200', 200" eines zweiten Kreislaufs 2 dargestellt. Die drei zweiten Erdkollektorvorrichtungen 200, 200', 200" sind in einem Grünbereich - im Ausführungsbeispiel der Fig. 2 in einem Gartenbereich des Grundstücks - in das Erdreich eingebracht. Die drei zweiten Erdkollektorvorrichtungen 200, 200', 200" sind daher unterhalb einer nicht-versiegelten Erdoberfläche 320 im Erdreich 300 eingebracht. In Fig. 2 ist schematisch dargestellt, wie über Sonneneinstrahlung und Regen eine Wärmemenge Q über die nicht-versiegelte Erdoberfläche 320 in das Erdreich 300 im Bereich der drei zweiten Erdkollektorvorrichtungen 200, 200', 200" gelangt. Wärmeenergie, die über die drei zweiten Erdkollektorvorrichtungen 200, 200', 200" dem Erdreich entzogen wird, wird insbesondere über wärmeres Oberflächenwasser/Regen, dem Erdreich 300 wieder zugeführt, so dass sich das Erdreich 300 im Bereich der drei zweiten Erdkollektorvorrichtungen 200, 200', 200" thermisch regeneriert. Auch die drei zweiten Erdkollektorvorrichtungen 200, 200', 200" sind über Zuleitungen 201, 202 durch die Verteiler 208, 209 miteinander verbunden.

Im Ausführungsbeispiel der Fig. 2 sind Zuleitungen 18, 28 des ersten Kreislaufs 1 und des zweiten Kreislaufs 2 durch ein Stellglied 500 voneinander getrennt. Im einfachsten Fall besteht das Stellglied 500 aus einer ersten handbetätigbaren Absperrung, die den ersten Kreislauf 1 schließt und öffnet und einer zweiten handbetätigbaren Absperrung, die den zweiten Kreislauf 2 schließt und öffnet. Alternativ kann auch ein Wegeventil mit oder ohne Zwischenstellungen verwendet werden. Bevorzugt wird ein 3-Wege-Mischventil als Stellglied 500 vorgesehen. Durch das 3-Wege-Mischventil wird ein erster Volumenstrom dV₁/dt im ersten Kreislauf 1 und ein zweiter Volumenstrom dV₂/dt im zweiten Kreislauf 2 regelungstechnisch proportional zueinander geändert, zum Beispiel in den Verhältnissen 0 : 100 oder 20 : 80 oder 30 : 70 oder 40 : 60 usw., so dass immer der gesamte Volumenstrom gefördert werden kann, je nachdem, ob geheizt, gekühlt oder regeneriert wird. Das 3-Wege-Mischventil ist im Vorlauf und/oder im Rücklauf der Kreisläufe 1, 2 angeordnet.

Im Ausführungsbeispiel der Fig. 2 weist das Stellglied 500 ein erstes servomotorisch stellbares Steuerventil 510, das mit dem ersten Kreislauf 1 verbunden ist, und ein zweites servomotorisch stellbares Steuerventil 520, das mit dem zweiten Kreislauf 2 verbunden ist, auf. Das erste Steuerventil 510 und das zweite Steuerventil 520 sind durch eine Steuerungsvorrichtung 600 gesteuert. Durch die Steuerungsvorrichtung 600 kann ein erster Durchfluss durch das erste Steuerventil 510 eingestellt werden, so dass beispielsweise ein erster Volumenstrom dV₁/dt in der ersten Zuleitung 18 des ersten Kreislaufs 1 und ein zweiter Volumenstrom dV₂/dt in der zweiten Zuleitung 28 des zweiten Kreislaufs 2 je nach gewähltem Betriebsmodus eingestellt werden. Der erste/zweite Volumenstrom dV₁/dt dV₂/dt wird zudem durch eine Pumpe 700 festgelegt, die im Ausführungsbeisplel der Fig. 2 an einem Ausgang der Wärmepumpe 400 angeschlossen ist. Die Pumpe 700 zur Umwälzung des Mediums ist ebenfalls durch die Steuerungsvorrichtung 600 gesteuert. Abweichend vom Ausführungsbeispiel der Fig. 2 ist die Wärmepumpe 400 üblicherweise im Gebäude installiert. Lediglich einer einfacheren Verständlichkeit geschuldet ist die Wärmepumpe 400 in Fig. 2 nur als Block im Flussplan dargestellt.

Mit der Steuerungsvorrichtung 600 ist weiterhin ein erster Temperatursensor 810 zur Messung einer ersten Temperatur T₁ des Mediums in einem ersten Rücklauf 19 des ersten Kreislaufs 1 verbunden. Weiterhin ist mit der Steuerungsvorrichtung 600 ein zweiter Temperatursensor 820 zur Messung einer zweiten Temperatur T₂ des Mediums in einem zweiten Rücklauf 29 des zweiten Kreislaufs 2 verbunden.

Die Steuerungsvorrichtung 600 ist - beispielsweise durch ein zugehöriges Steuerungsprogramm - zum Betrieb in unterschiedlichen Betriebsmodi eingerichtet.

In einem ersten Betriebsmodus wird das Stellglied 500 zum gleichzeitigen parallelen Durchfluss des Mediums durch den ersten Kreislauf 1 und durch den zweiten Kreislauf 2 gesteuert. Der erste Betriebsmodus ist insbesondere für einen Heizbetrieb im Winter sinnvoll, wenn die Erdwärme mittels beider Kreisläufe 1, 2 dem Erdreich 300 entzogen werden soll.

In den Sommermonaten ist ein zweiter Betriebsmodus sinnvoll. Der zweite Betriebsmodus ist für einen Kühlbetrieb geeignet, indem das Stellglied 500 zum Durchfluss des Mediums vorrangig durch den ersten Kreislauf 1 durch die Steuerungsvorrichtung 600 gesteuert wird. Zugleich wird das Erdreich 300 im Bereich der drei ersten Erdkollektorvorrichtung 100, 100', 100" durch die aus dem Gebäude entzogene Wärme thermisch regeneriert. Bei sorgsamer Auslegung des Erdkollektorsystems ist eine zusätzliche Befeuchtung oder anderweitige thermische Regeneration des Erdreichs 300 unter der versiegelten Oberfläche 310 nicht notwendig.

Wird beispielsweise im Sommer für die Warmwasserbereitung oder zur Beheizung eines Schwimmbades eine deutlich höhere Heizleistung benötigt, wird in einem dritten Betriebsmodus das Stellglied 500 zum Durchfluss des Mediums durch den ersten Kreislauf 1 und/oder den zweiten Kreislauf 2 in Abhängigkeit von der ersten Temperatur T₁ des Mediums im ersten Kreislauf 1 und der zweiten Temperatur T₂ des Mediums im zweiten Kreislauf 2 gesteuert. Beispielsweise wird mittels einer Regelung durch die Steuerungsvorrichtung 600 der wärmere Kreislauf 1, 2 ausgewählt. Haben beide Kreisläufe 1, 2 die gleiche Rücklauftemperatur T₁, T₂, so können beide Kreisläufe 1, 2 gleichzeitig mit dem Medium durchflossen werden, also gleichzeitig genutzt werden.

In einem vierten Betriebsmodus wird eine thermische Regeneration des ersten Kreislaufs 1 mittels des zweiten Kreislaufs 2 bewirkt. Wird davon ausgegangen, dass das Erdreich 300 im Bereich der drei ersten Erdkollektorvorrichtungen 100, 100', 100" eine signifikant geringere Temperatur aufweist als das Erdreich 300 im Bereich der drei zweiten Erdkollektorvorrichtungen 200, 200', 200" wird mittels der Pumpe 700 und des Stellgliedes 500 Wärme dem Erdreich 300 im Bereich der drei zweiten Erdkollektorvorrichtungen 200, 200', 200" entzogen und dem Erdreich 300 im Bereich der drei ersten Erdkollektorvorrichtungen 100, 100', 100" zugeführt, indem das Medium aus den drei zweiten Erdkollektorvorrichtungen 200, 200', 200" in die drei ersten Erdkollektorvorrichtungen 100, 100', 100" gepumpt wird, wobei das erwärmte Medium die Wärme im Bereich der drei ersten Erdkollektorvorrichtungen 100, 100', 100" an das kühlere Erdreich 300 abgibt. Hierzu wird das Stellglied 500 zum Durchfluss des Mediums durch den ersten Kreislauf 1 und den zweiten Kreislauf 2 gesteuert, indem der ersten Kreislauf 1 und der zweite Kreislauf 2 mittels des Stellgliedes 500 beispielsweise in Reihe geschaltet werden.

Die einzelnen Betriebsmodi sind zudem abhängig von einer ersten Anzahl der ersten Erdkollektorvorrlchtungen 100, 100', 100" und einer zweiten Anzahl der zweiten Erdkollektorvorrichtungen 200, 200', 200", beziehungsweise einem Verhältnis von erster Anzahl und zweiter Anzahl zueinander. Die erste Anzahl und die zweite Anzahl sollten dabei in einem Verhältnis von 4 : 6 bis 6 :4 gewählt werden.

In Fig. 3 ist ein weiteres Ausführungsbeispiel der Erfindung dargestellt. Dargestellt ist ein Gebäude, dass ein Dachgeschoss 912, ein Erdgeschoss 911 und ein Kellergeschoss 910 aufweist. Das Kellergeschoss 910 ist in einer Baugrube 950 errichtet.

Im Ausführungsbeispiel der Fig. 3 sind ein erste Schlitz 190 und ein zweiter Schlitz 191 mittels eines Schlitzfräsverfahrens in die Sohle 955 der Baugrube 950 vor der Errichtung des Gebäudes 900 gefräst. Ein Erdkollektorsystem für eine Wärmepumpe des Gebäudes 900 weist eine Anzahl von ersten Erdkollektorvorrichtungen 100, 100', 100" auf, die als flächige Einheit (Modul) ausgebildet sind. Jede erste Erdkollektorvorrichtung 100, 100', 100" Ist im Schlitz 190, 190' unterhalb des Kellergeschosses 910 von dem Kellergeschoss 910 distanziert angeordnet. Weiterhin könnten entsprechend dem Ausführungsbeispiel der Fig. 2 zudem zweite Erdkollektorvorrichtung unterhalb einer nicht-versiegelten Oberfläche ins Erdreich eingebracht sein (in Fig. 3 nicht dargestellt).

Vor der Errichtung des Gebäudes 900 werden die Schlitze 190, 190' mit einem Füllmaterial 191, 191' verfüllt. Das Füllmaterial ist beispielsweise das durch das Fräsen herausgefräst Erdreich. Wird eine besondere Festigkeit des Erdreichs benötigt, wird ein aushärtendes Material, wie beispielsweise Beton, als Füllmaterial zur Verfüllung der Schlitze 190, 190' verwendet. Das Kellergeschoss 910 weist an seiner Unterseite eine Dämmung 930 zur Wärmeisollerung auf, so dass ein Wärmeverlust von dem Kellergeschoss 910 In Richtung Erdreich 300 minimiert ist.

Im Ausführungsbeispiel der Fig. 3 ist jede erste Erdkollektorvorrichtung 100, 100', 100" oberhalb eines Grundwasserbereichs 390 angeordnet. Das Grundwasser im Grundwasserbereich Ist Wasser, das unter der Erdoberfläche in Hohlräumen im Grundwasserbereich einen Wasserkörper bildet. Über das Grundwasser wird dem Erdreich 300 im Bereich der ersten Erdkollektorvorrichtungen 100, 100', 100" somit kaum Wärmeenergie zugeführt. Das Erdreich 300 im Bereich der ersten Erdkollektorvorrichtungen 100, 100', 100" dient somit als Wärme/Kälte-Speicher. Für eine gute Wärmeleitfähigkeit des Erdreichs 300 sollte das Erreich 300 im Bereich der ersten Erdkollektorvorrichtungen 100, 100', 100" eine Mindestfeuchte aufweisen. Wird dem Erdreich 300 im Bereich der ersten Erdkollektorvorrichtungen 100, 100', 100" viel Wärmeenergie entzogen, führt dies zu einer Vereisung des Erdreichs 300 im Bereich der ersten Erdkollektorvorrichtungen 100, 100', 100". Aufgrund der vertikalen Ausrichtung der ersten Erdkollektorvorrichtungen und des Abstandes zur Grundplatte des Kellergeschosses 910 des Gebäudes 900 verursacht die Vereisung jedoch keine Verformung/Hebung des Erdreichs im Bereich der Bodenplatte und hat somit keine negativen Auswirkungen auf die Statik des Gebäudes 900.

Die Erfindung ist nicht auf die dargestellten Ausgestaltungsvarlanten der Figuren 1 bis 3 beschränkt. Beispielsweise ist es möglich, eine andere Anzahl oder ein anderes Verhältnis von Erdkollektorvorrichtung unterhalb der versiegelten beziehungsweise unterhalb der nicht-versiegelten Erdoberfläche vorzusehen. Auch ist es möglich, eine anderes als das dargestellte Stellglied, beispielsweise ein rein manuell betriebenes Stellglied, zu verwenden.

### Bezugszeichenliste

- 1, 2: Kreislauf
- 18, 28: Vorlauf
- 19, 29: Rücklauf
- 100, 100', 100", 200,: Erdkollektorvorrichtung
- 200', 200" 101, 102, 201, 202: Zuleitungen
- 108, 109, 208, 209: Verteiler
- 110: Kunststoffrohr
- 113, 114: Träger
- 190, 190', 209: Schlitz
- 191, 191': Füllmaterial
- 300: Erdreich
- 310: versiegelte Erdoberfläche
- 320: nicht-versiegelte Erdoberfläche
- 390: Grundwasserbereich
- 400: Wärmepumpe
- 500: Stellglied
- 510, 520: Ventil
- 600: Steuerungsvorrichtung
- 700: Pumpe
- 810, 820: Temperatursensor
- 900: Gebäude
- 910, 911, 912: Geschoss
- 930: Dämmung
- 950: Baugrube
- 955: Grubensohle
- T₁, T₂: Temperatur
- dV₁/dt, dV₂/dt: Volumenstrom
- B, H, L: Abmessung
- A: Fläche

## Patentansprüche

1. Erdkollektorsystem für eine Wärmepumpe (400),
- mit einem ersten Kreislauf (1), wobei der erste Kreislauf (1) eine erste Erdkollektorvorrichtung (100, 100', 100") aufweist,
- mit einem zweiten Kreislauf (2), wobei der zweite Kreislauf (2) eine zweite Erdkollektorvorrichtung (200, 200', 200") aufweist,
**dadurch gekennzeichnet,**
- **dass** mit dem ersten Kreislauf (1) und mit dem zweiten Kreislauf (2) ein Stellglied (500) verbunden ist,
- **dass** die erste Erdkollektorvorrichtung (100, 100', 100") unterhalb einer versiegelten Erdoberfläche (310) angeordnet ist,
- **dass** die zweite Erdkollektorvorrichtung (200, 200', 200") unterhalb einer nicht-versiegelten Erdoberfläche (320) angeordnet ist, und
- **dass** das Stellglied (500) zum einstellbaren Einlass eines Mediums zum Wärmetransport in den ersten Kreislauf (1) und/oder den zweiten Kreislauf (2) und/oder zum einstellbaren Auslass des Mediums aus dem ersten Kreislauf (1) und/oder dem zweiten Kreislauf (2) ausgebildet ist.

2. Erdkollektorsystem nach Anspruch 1, **dadurch gekennzeichnet,**
- **dass** das Stellglied (500) ausgebildet ist, den ersten Kreislauf (1)
und den zweiten Kreislauf (2) parallel zu schalten,
und/oder
- **dass** das Stellglied (500) ausgebildet ist, den ersten Kreislauf (1)
und den zweiten Kreislauf (2) in Reihe zu schalten,
und/oder
- **dass** das Stellglied (500) ausgebildet ist, den ersten Kreislauf (1)
und den zweiten Kreislauf (2) einzeln zu schalten,
und/oder
- **dass** das Stellglied (500) ausgebildet ist, ein Verhältnis eines ersten Durchflusses (dVᵢ/dt) durch den ersten Kreislauf (1) und eines zweiten Durchflusses (dV₂/dt) durch den zweiten Kreislauf (2) zu steuern.

3. Erdkollektorsystem nach einem der vorhergehenden Ansprüche, **dadurch gekennzeichnet, dass** das Stellglied (500) zur
- Handbetätigung
und/oder
- Mediumbetätigung
und/oder
- elektromotorischen Betätigung
und/oder
- elektromagnetischen Betätigung
ausgebildet ist.

4. Erdkollektorsystem nach einem der vorhergehenden Ansprüche, **dadurch gekennzeichnet,**
- **dass** der erste Kreislauf (1) einen ersten Verteiler (108, 109) aufweist, an den Zuleitungen (101, 102) mehrerer erster Erdkollektorvorrichtungen (100, 100', 100") angeschlossen sind, und/oder
- **dass** der zweite Kreislauf (2) einen zweiten Verteiler (208, 209) aufweist, an den Zuleitungen (201, 202) mehrerer zweiter Erdkollektorvorrichtungen (200, 200', 200") angeschlossen sind.

5. Erdkollektorsystem nach einem der vorhergehenden Ansprüche, **dadurch gekennzeichnet,**
- **dass** mit dem Stellglied (500) und/oder mit dem ersten Kreislauf (1) und zweiten Kreislauf (2) eine Pumpe (700) zum Transport des Mediums verbunden ist.

6. Erdkollektorsystem nach einem der vorhergehenden Ansprüche, **dadurch gekennzeichnet,**
- **dass** mit dem Stellglied (500) eine Steuerungsvorrichtung (600) verbunden ist, wobei die Steuerungsvorrichtung (600) zur Steuerung einer Anzahl von Betriebsmodi, Insbesondere eines Heizbetriebs und eines Kühlbetriebs, eingerichtet ist.

7. Erdkollektorsystem nach Anspruch 6, **dadurch gekennzeichnet,**
- **dass** die Steuerungsvorrichtung (600) mit einem ersten Temperatursensor (810) zur Messung einer ersten Temperatur (T₁) im ersten Kreislauf (1) und mit einem zweiten Temperatursensor (820) zur Messung einer zweiten Temperatur (T₂) im zweiten Kreislauf (2) verbunden ist.

8. Erdkollektorsystem nach einem der Ansprüche 6 oder 7, **dadurch gekennzeichnet, dass** die Steuerungsvorrichtung (600) eingerichtet ist,
- in einem ersten Betriebsmodus das Stellglied (500) zum gleichzeitigen parallelen Durchfluss des Mediums durch den ersten Kreislauf (1) und durch den zweiten Kreislauf (2) zu steuern, und/oder
- in einem zweiten Betriebsmodus für einen Kühlbetrieb das Stellglied (500) zum Durchfluss des Mediums vorrangig durch den ersten Kreislauf (1) zu steuern,
und/oder
- in einem dritten Betriebsmodus für einen Heizbetrieb das Stellglied (500) zum Durchfluss des Mediums durch den ersten Kreislauf (1) und/oder den zweiten Kreislauf (2) in Abhängigkeit von der ersten Temperatur (T₁) des Mediums im ersten Kreislauf (1) und der zweiten Temperatur (T₂) des Mediums im zweiten Kreislauf (2) zu steuern,
und/oder
- in einem vierten Betriebsmodus das Stellglied (500) zu steuern zum Durchfluss des Mediums durch den ersten Kreislauf (1) und den zweiten Kreislauf (2) durch Reihenschaltung des ersten Kreislaufs (1) und des zweiten Kreislaufs (2) mittels des Stellgliedes (500).

9. Erdkollektorsystem nach einem der vorhergehenden Ansprüche,
- bei dem die erste Erdkollektorvorrichtung (100, 100', 100'') als flächige Einheit (Modul) ausgebildet ist,
- bei dem die erste Erdkollektorvorrichtung (100, 100', 100") in einem Schlitz (190, 190') im Erdreich (300) angeordnet ist, wobei der Schlitz (190, 190') in die Sohle (955) einer Grube (950) für eine Errichtung eines Gebäudes (900) ins Erdreich (300) gefräst ist,
- bei dem die Erdkollektorvorrichtung (100, 100', 100") im Schlitz (190, 190') unterhalb eines im Erdreich (300) ausgebildeten Geschosses (910) des Gebäudes (900) von dem Geschoss (910) des Gebäudes (900) distanziert angeordnet ist, und
- bei dem der Schlitz (190, 190') mit einem Füllmaterial (191, 191') verfüllt ist.

10. Erdkollektorsystem nach einem der vorhergehenden Ansprüche,
- bei dem die Erdkollektorvorrichtung (100, 100', 100") vorwiegend vertikal angeordnet ist.

11. Erdkollektorsystem nach einem der vorhergehenden Ansprüche,
- bei dem die Erdkollektorvorrichtung (100, 100', 100") oberhalb eines Grundwasserbereichs (390) angeordnet ist.

12. Erdkollektorsystem nach einem der vorhergehenden Ansprüche, **dadurch gekennzeichnet,**
- **dass** das Füllmaterial (191, 191') ein sich verfestigendes Material, insbesondere Beton aufweist.

13. Verfahren zur Steuerung eines Erdkollektorsystems
- mit einem ersten Kreislauf (1), der eine erste Erdkollektorvorrichtung (100, 100', 100") unterhalb einer versiegelten Erdoberfläche (310) und einen ersten Temperatursensor (810) aufweist,
- mit einem zweiten Kreislauf (2), der eine zweite Erdkollektorvorrichtung (200, 200', 200") unterhalb einer nicht-versiegelten Erdoberfläche (320) und einen zweiten Temperatursensor (820) aufweist,
- mit einem Stellglied (500), das mit ersten Kreislauf (1) und mit dem zweiten Kreislauf (2) verbunden ist, und
- mit einer Steuerungsvorrichtung (600), die mit dem Stellglied (500), dem ersten Temperatursensor (810) und dem zweiten Temperatursensor (820) verbunden ist,
- wobei eine erste Temperatur (T₁) eines Mediums zum Wärmetransport In einem ersten Rücklauf (19) des ersten Kreislaufs (1) durch den ersten Temperatursensor (810) gemessen wird,
- wobei eine zweite Temperatur (T₂) des Mediums in einem zweiten Rücklauf (29) des zweiten Kreislaufs (2) durch den zweiten Temperatursensor (820) gemessen wird, und
- wobei durch die Steuerungsvorrichtung (600) das Stellglied (500) basierend auf der ersten Temperatur (T₁) und der zweiten Temperatur (T₂) gesteuert wird.

14. Verfahren zur Errichtung eines Erdkollektorsystems
- mit einem ersten Kreislauf (1), wobei der erste Kreislauf (1) eine erste Erdkollektorvorrichtung (100, 100', 100") aufweist, und
- mit einem zweiten Kreislauf (2), wobei der zweite Kreislauf (2) eine
zweite Erdkollektorvorrichtung (200, 200', 200") aufweist,
**dadurch gekennzeichnet,**
- **dass** mit dem ersten Kreislauf (1) und mit dem zweiten Kreislauf (2) ein Stellglied (500) verbunden wird, wobei das Stellglied (500) zum einstellbaren Einlass eines Mediums zum Wärmetransport in den ersten Kreislauf (1) und/oder den zweiten Kreislauf (2) und/oder zum einstellbaren Auslass des Mediums aus dem ersten Kreislauf (1) und/oder dem zweiten Kreislauf (2) ausgebildet ist,
- **dass** die erste Erdkollektorvorrichtung (100, 100', 100") unterhalb einer versiegelten Erdoberfläche (310) angeordnet wird, und
- **dass** die zweite Erdkollektorvorrichtung (200, 200', 200") unterhalb einer nicht-versiegelten Erdoberfläche (320) angeordnet wird.

15. Verfahren nach Anspruch 14,
- bei dem in einer Grube (950) zur Errichtung eines Gebäudes (900) in die Sohle (955) der Grube (950) ein Schlitz (190, 190') eingebracht wird, derart dass der Schlitz (190, 190') unterhalb eines Geschosses (910) des Gebäudes (900) positioniert ist,
- bei dem in den Schlitz (190, 190') die erste Erdkollektorvorrichtung (100, 100', 100") eingebracht wird, und
- bei dem der Schlitz (190, 190') mit einem Füllmaterial (191, 191') verfüllt wird.
